# EUROPEAN PATENT SPECIFICATION

(11) **EP 4 458 610 B1**
(45) Date of publication and mention of the grant of the patent: **25.02.2026**
(21) Application number: 23171266.2
(22) Date of filing: 03.05.2023
(51) Int. Cl.: B60N 2/02, B60R 21/017, B60R 16/037

(54) **SEAT FOR AN OCCUPANT OF A VEHICLE**
SITZ FÜR EINEN INSASSEN EINES FAHRZEUGS
SIÈGE POUR UN OCCUPANT D'UN VÉHICULE

(43) Date of publication of application: 06.11.2024
(73) Proprietor: Veoneer Sweden Safety Systems AB, 10302 Stockholm (SE)
(72) Inventor: POSADA, Esteban, 95800 Cergy-Pontoise (FR); DOBROVOLSCHI, Victor, 95800 Cergy-Pontoise (FR)
(74) Representative: Reichert & Lindner Partnerschaft Patentanwälte

(56) References cited:
- EP-A1- 3 546 280
- WO-A2-2018/156586
- US-A1- 2021 107 422

## Description

The invention relates to a seat for an occupant of a vehicle, more specifically a seat which has a restraint for the occupant.

Document WO 2018/156586 discloses a seat (occupant seat) for an occupant of a vehicle, the seat including a restraint for the occupant; a first connector, capable of being connected to a power supply for the operation of the restraint and capable of being connected to a communication line for carrying signals related to the operation of the restraint; a second connector, capable of being connected to a power supply for the operation of the restraint and capable of being connected to a communication line for carrying signals related to the operation of the restraint; a control unit for the restraint.

In modern vehicles, seats are removable and may be mounted in different orientations, for example forward and backward. Seats are also often equipped with restraints for occupants of the seat. Such restraints receive power via a power line in the vehicle and communicate with one or more data processing systems on board of the vehicle via a communication line. In order to assure proper functioning of the restraints, the power line must be connected correctly to the seat and the communication line must be connected correctly to the seat. These correct connections must be established in any of the possible orientations of the seat in the vehicle, e.g., regardless of whether the seat is facing forward or facing backward. With power line and communication line fixed in the vehicle, realized for example as power bus bar and communication bus bar (for instance, CAN, LIN, Flexray), a change of orientation of the seat changes the relative positions of connectors in the seat to power line and communication line. This change of relative positions must be addressed by additional means, and if forgotten, is a cause of malfunction of the restraint.

Therefore, it is the object of the invention to provide a seat where this cause of malfunction has been eliminated.

This object is achieved by a seat according to claim 1. The dependent claims refer to advantageous embodiments. Claim 7 refers to a corresponding restraint system. The seat according to the invention is a seat for an occupant of a vehicle and includes a restraint for the occupant. The seat furthermore has a first connector, capable of being connected to a power supply for the operation of the restraint and capable of being connected to a communication line for carrying signals related to the operation of the restraint. The seat also has a second connector, capable of being connected to a power supply for the operation of the restraint and capable of being connected to a communication line for carrying signals related to the operation of the restraint. That is to say, each of the first connector and the second connector can be connected to either the power supply for the restraint or the communication line. The power supply can be any suitable power supply for the restraint, for example a power line from a battery of the vehicle, which power line may take the form of a power bus bar. The communication line can be any suitable line for carrying signals related to the operation of the restraint, like trigger signals, and may for example also be realized as a bus bar. The precise configuration of the connectors, e.g., number and arrangement of pins and/or slots, may vary depending on the precise configuration of the power supply and communication line the connectors are intended to connect to, but the configuration of each connector is such that it can connect to either of the power supply and the communication line.

The seat furthermore includes a control unit for the restraint. The control unit is switchable between a first mode of operation, in which power for the operation of the restraint is supplied via the first connector, and a second mode of operation, in which power for the operation of the restraint is supplied via the second connector. This switching is automatic, depending on which of the connectors is connected to power supply and communication line, respectively, if the seat is mounted in a vehicle.

As the control unit can automatically switch between modes of operation, no additional steps must be taken if the orientation of the seat is changed, e.g., no external harnesses or wiring is required.

For example, in order to achieve the automatic switching, each of the connectors may be configured to detect if it is connected to the communication line. If either the first connector or the second connector detects that it is connected to the communication line, it may emit a control signal to cause the control unit to enter that mode of operation in which the respective other one of the first connector and the second connector is connected to the power supply. As a further example, the voltages applied to the first connector and the second connector via the power line and communication line, respectively, may provide power to one or more switches in the control unit in such a way that these one or more switches switch the control unit into the correct mode of operation.

In a first embodiment of the seat, the control unit has a set of internal contacts for power supply and a set of internal contacts for communication. The control unit furthermore has at least one switch. By switching of the at least one switch the mode of operation of the control unit is changed. For the first mode of operation, the at least one switch connects the first connector to the set of internal contacts for power supply and connects the second connector to the set of internal contacts for communication. For the second mode of operation, the at least one switch connects the second connector to the set of internal contacts for power supply and connects the first connector to the set of internal contacts for communication.

In a more specific variant of the first embodiment, the at least one switch includes a first relay and a second relay, wherein the second relay is different from the first relay. The first connector is connectable by the first relay to either the set of internal contacts for power supply or the set of internal contacts for communication. The second connector is connectable by the second relay to either the set of internal contacts for power supply or the set of internal contacts for communication. The first and second relay are operated such that one of the first connector and the second connector is connected to the set of internal contacts for power supply, and the respective other one of the first connector and the second connector is connected to the set of internal contacts for communication.

In a second embodiment, the first connector includes a first transceiver for communication and the second connector includes a second transceiver for communication. The control unit has a set of internal contacts for power supply and at least one switch. The at least one switch is configured to, for the first mode of operation, connect the first connector to the set of internal contacts for power supply, and for the second mode of operation, connect the second connector to the set of internal contacts for power supply. The control unit is configured to handle communication related to the restraint via the second transceiver in the first mode of operation and via the first transceiver in the second mode of operation.

In a specific variant of the second embodiment, the at least one switch includes a first relay and a second relay, wherein the second relay is different from the first relay. The first connector is connectable by the first relay to the set of internal contacts for power supply, the second connector is connectable by the second relay to the set of internal contacts for power supply. The relays are operated such that only one of the first connector and the second connector is connected to the set of internal contacts for power supply.

In a further variant of the second embodiment, the first transceiver is configured to detect whether the first connector is connected to the communication line, and, if this is the case, to send a control signal to cause the at least one switch to connect the second connector to the set of internal contacts for power supply. Also, the second transceiver is configured to detect whether the second connector is connected to the communication line, and, if this is the case, to send a control signal to cause the at least one switch to connect the first connector to the set of internal contacts for power supply. Each transceiver thus can detect whether the connector it forms part of is connected to the communication line. If the transceiver in one of the connectors detects this, then it is deduced that the respectively other connector is connected to the power supply and the at least one switch is set accordingly.

The restraint system according to the invention for a vehicle includes a seat according to the invention as described above. The restraint system also includes a power line for supplying power for the operation of the restraint and a communication line for carrying signals related to the operation of the restraint. The connections of the connectors depend on the orientation of the seat. The first connector of the seat is connected to the power line and the second connector of the seat is connected to the communication line, if the seat is in a first orientation; in this case, the control unit of the seat has to be in the first mode of operation. The second connector of the seat is connected to the power line and the first connector of the seat is connected to the communication line, if the seat is in a second orientation; in this case, the control unit of the seat has to be in the second mode of operation.

Below, the invention and its advantages will be described with reference to the accompanying figures.
- Figures 1 and 2: illustrate the basic problem addressed by the invention.
- Figure 3: schematically shows a seat according to the invention.
- Figure 4: schematically illustrates an embodiment of the invention.
- Figure 5: schematically illustrates an embodiment of the invention.
- Figure 6: schematically shows circuitry for triggering switching between modes of operation.
- Figure 7: shows a restraint system according to the invention.

The figures only show examples of how the invention can be implemented. Therefore, the figures are not to be interpreted as a limitation of the invention to the examples shown.

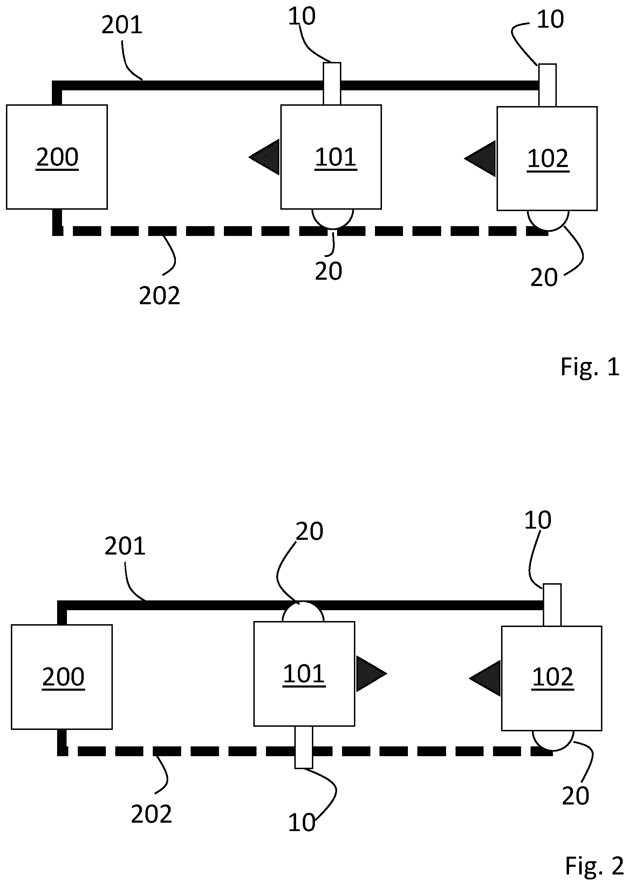

**Figs. 1** and **2** illustrate the basic problem addressed by the invention. Shown are seats 101 and 102 with respective first connectors 10 and second connectors 20. Also shown is a main controller 200 for a restraint (not shown) in the seats 101, 102. A power line 201 for power supply of the restraint and a communication line 202 for carrying signals related to the restraint run from the main controller 200 to the seats 101, 102. In Fig. 1, seats 101 and 102 face in the same direction (indicated by the black triangle). Seats 101 and 102 are connected to the power line 201 via their respective first connectors 10. Seats 101 and 102 are connected to the communication line 202 via their respective second connectors 20. Here the situation is considered that first connector 10 is the correct connector for supplying power from the power line 201 to the restraint of the respective seat, and second connector 20 is the correct connector for connecting to the communication line 202.

In Fig. 2, the orientation of seat 101 has been reversed by 180 degrees with respect to Fig. 1. No other change has been made with respect to Fig. 1. Here, seat 101 would connect to power line 201 with second connector 20, and to communication line 202 with first connector 10. As this is not the correct association of connectors 10, 20 to lines 201, 202, additional measures are required. Such measures could consist in additional wiring re-establishing the correct association between connectors 10, 20 and lines 201, 202 after a change of orientation of the seat 101. Mounting such additional wiring requires extra steps whenever the orientation of a seat is changed. Examples of the solution according to the invention are discussed with reference to the subsequent figures.

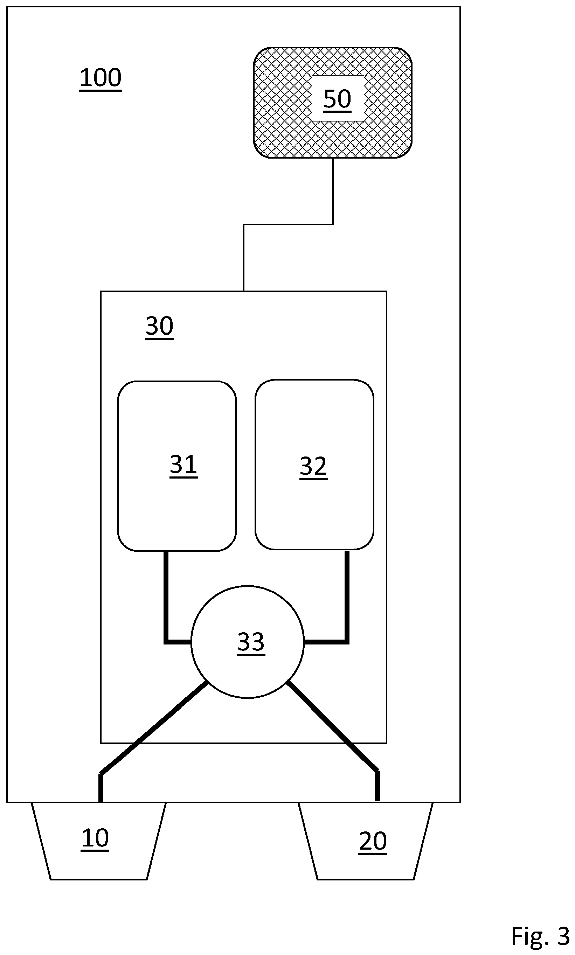

**Fig. 3** schematically shows a seat 100 according to the invention with a restraint 50, a control unit 30 for the restraint 50, a first connector 10 and a second connector 20. The control unit 30 includes a power block 31, which represents those sub-systems of the control unit 30 handling the supply of power to the restraint 50. The control unit 30 includes a communication block 32, which represents those sub-systems of the control unit 30 handling communication signals related to the operation of the restraint 50. The control unit 30 here also includes a switching unit 33. The switching unit 33 is configured to detect which of the connectors 10, 20 is connected to a communication line for carrying signals related to the operation of the restraint 50 and to switch the control unit 30 into the appropriate mode of operation.

The control unit 30 will be switched into the first mode of operation, if the switching unit 33 detects that the second connector 20 is connected to the communication line, from which it is inferred that the first connector 10 is connected to a power supply for the restraint 50. The switching unit 33 in this case will connect first connector 10 to the power block 31 and will connect second connector 20 to the communication block 32.

The control unit 30 will be switched into the second mode of operation, if the switching unit 33 detects that the first connector 10 is connected to the communication line, from which it is inferred that the second connector 20 is connected to the power supply for the restraint 50. The switching unit 33 in this case will connect first connector 10 to the communication block 32 and will connect second connector 20 to the power block 31.

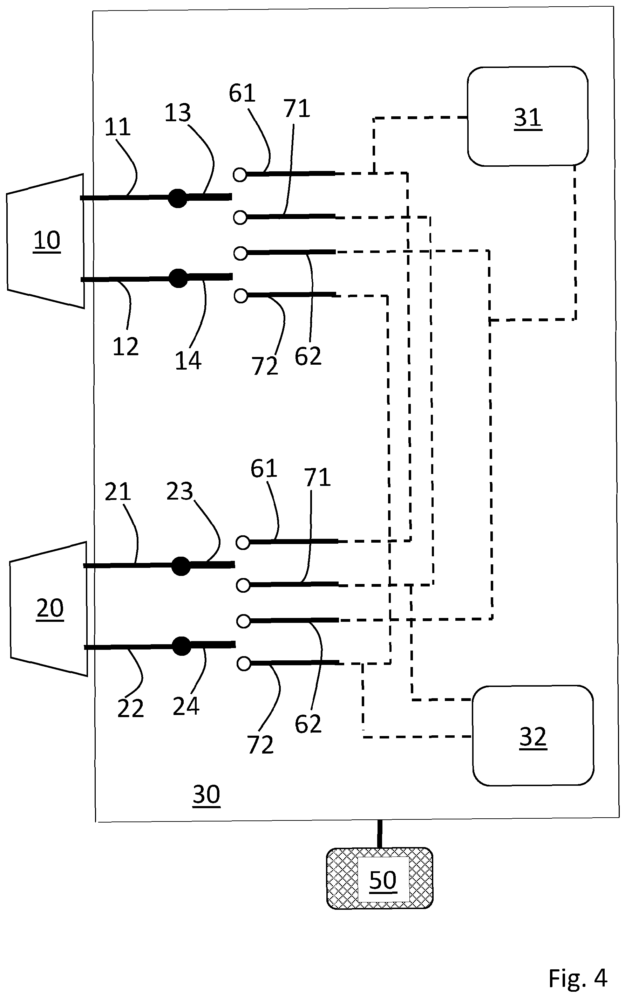

**Fig. 4** schematically illustrates an embodiment of the invention. Shown are the first connector 10, which here has two terminals 11, 12, and the second connector 20, which here has two terminals 21, 22. Also shown is the control unit 30, for which power block 31 and communication block 32 are shown. Power block 31 represents those sub-systems of the control unit 30 handling the supply of power to the restraint 50; communication block 32 represents those sub-systems of the control unit 30 handling communication signals related to the operation of the restraint 50. The control unit 30 has a set of internal contacts 61, 62 for power supply and a set of internal contacts 71, 72 for communication. As indicated, internal contacts 61 for power supply and internal contacts 62 for power supply are connected to power block 31, internal contacts 71 for communication and internal contacts 72 for communication are connected to communication block 32.

The control unit 30 further includes switches 13, 14, 23, 24.

For the first mode of operation, switch 13 connects terminal 11 to internal contact 61 for power supply, switch 14 connects terminal 12 to internal contact 62 for power supply, switch 23 connects terminal 21 to internal contact 71 for communication, switch 24 connects terminal 22 to internal contact 72 for communication. Thus, for the first mode of operation, the first connector 10 is connected to the power block 31, and the second connector 20 is connected to the communication block 32.

For the second mode of operation, switch 13 connects terminal 11 to internal contact 71 for communication, switch 14 connects terminal 12 to internal contact 72 for communication, switch 23 connects terminal 21 to internal contact 61 for power supply, switch 24 connects terminal 22 to internal contact 62 for power supply. Thus, for the second mode of operation, the second connector 20 is connected to the power block 31, and the first connector 10 is connected to the communication block 32.

The switches may for example be implemented by relays. But any other suitable switching elements, in particular electronic devices like transistors, may also be used. There may be a respective relay for each of the switches 13, 14, 23, 24. It is also conceivable that a first relay actuates switches 13 and 14, and a second relay actuates switches 23 and 24.

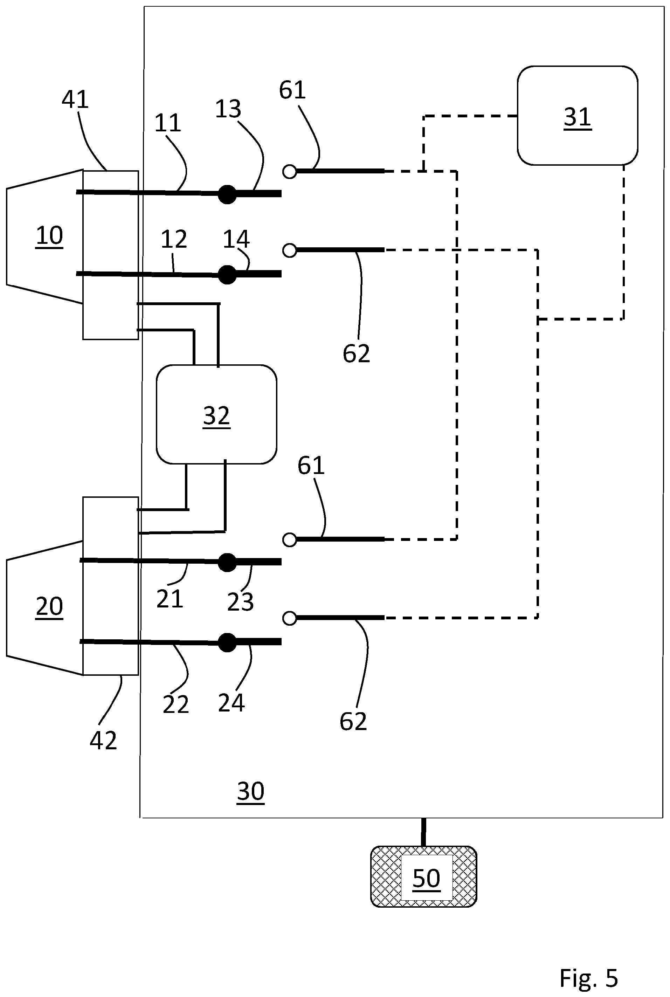

**Fig. 5** schematically illustrates an embodiment of the invention. Shown are the first connector 10, which here has two terminals 11, 12, and the second connector 20, which here has two terminals 21, 22. Also shown is the control unit 30, for which power block 31 and communication block 32 are shown. Power block 31 represents those sub-systems of the control unit 30 handling the supply of power to the restraint 50; communication block 32 represents those sub-systems of the control unit 30 handling communication signals related to the operation of the restraint 50. The control unit 30 has a set of internal contacts 61, 62 for power supply. As indicated, internal contacts 61 for power supply and internal contacts 62 for power supply are connected to power block 31.

First connector 10 includes a first transceiver 41, second connector 20 includes a second transceiver 42. The first transceiver 41 and the second transceiver 42 are connected to communication block 32. In this embodiment, communication signals related to the operation of the restraint 50 are always handled by one of the transceivers, more precisely the transceiver of that connector via which power is not supplied. That is, in the first mode of operation, where power is supplied via the first connector 10, communication is handled via the second transceiver 42; and in the second mode of operation, where power is supplied via the second connector 20, communication is handled via the first transceiver 41. In each of the first mode of operation and the second mode of operation, one of the first transceiver 41 and the second transceiver 42 will be exposed to the voltage of the power supply, for example the voltage from a battery of the vehicle. The first transceiver 41 and the second transceiver 42 must be able to tolerate this voltage; suitable transceivers are known in the art and can be chosen accordingly.

The control unit 30 further includes switches 13, 14, 23, 24.

For the first mode of operation, switch 13 connects terminal 11 to internal contact 61 for power supply, switch 14 connects terminal 12 to internal contact 62 for power supply. Thus, for the first mode of operation, the first connector 10 is connected to the power block 31.

For the second mode of operation, switch 23 connects terminal 21 to internal contact 61 for power supply, switch 24 connects terminal 22 to internal contact 62 for power supply. Thus, for the second mode of operation, the second connector 20 is connected to the power block 31.

The switches may for example be implemented by relays. But any other suitable switching elements, in particular electronic devices like transistors, may also be used. There may be a respective relay for each of the switches 13, 14, 23, 24. It is also conceivable that a first relay actuates switches 13 and 14, and a second relay actuates switches 23 and 24.

The first transceiver 41 and the second transceiver 42 may be configured to detect whether the respective connector is connected to the communication line 202 (see Figs. 1 and 2), e.g., whether voltages at terminals of the respective connector correspond to communication signals related to the operation of the restraint 50. If this is found to be the case, the respective transceiver may issue a control signal which causes the switches connected to the terminals of the other connector to connect to the internal contacts 61, 62 for power supply. More precisely, if first connector 10 is connected to the communication line 202, first transceiver 41 will detect that it is connected to the communication line 202 via the first connector 10 and issue a control signal which causes switch 23 to connect to internal contact 61 and causes switch 24 to connect to internal contact 62. The control unit 30 will then be in the second mode of operation. On the other hand, if second connector 20 is connected to the communication line 202, second transceiver 42 will detect that it is connected to the communication line 202 via the second connector 20 and issue a control signal which causes switch 13 to connect to internal contact 61 and causes switch 14 to connect to internal contact 62. The control unit 30 will then be in the first mode of operation. The control signal issued by the respective transceiver 41 or 42 may be directed to the respective ones of the switches 13, 14, 23, 24 which are to connect to the internal contacts 61, 62 for power supply. Alternatively, the control signal issued by the respective transceiver 41 or 42 may be directed to a sub-system in the control unit 30 which sub-system in turn issues a signal to cause the respective ones of the switches 13, 14, 23, 24 to connect to the internal contacts 61, 62 for power supply.

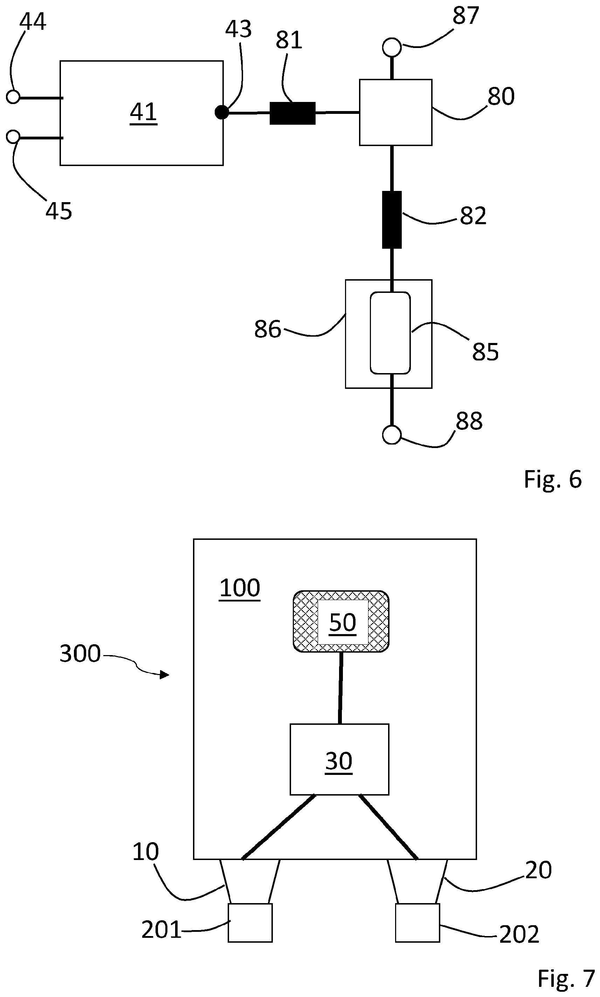

**Fig. 6** shows an example of circuitry for triggering the switching between modes of operation of the control unit. The example is discussed in the context of the first transceiver 41, for the second transceiver the example would work analogously. An output terminal 43 of transceiver 41 is connected via a resistor 81 to a transistor 80, for example a MOSFET. Transistor 80, together with a resistor 82 and a coil 85 of a relay 86, is connected between contacts 87 and 88, via which voltage for powering the coil 85 is supplied. The transceiver 41 is configured to detect whether it receives communication signals via its input terminals 44, 45. If the transceiver 41 does detect communication signals at input terminals 44, 45, it sends a control signal from output terminal 43 to the base (or gate) contact of transistor 80. In this case, the control signal is a voltage which causes the transistor 80 to act as a closed switch, so that sufficient current is flowing through coil 85 to cause the relay 86 to change its switching state. With reference to Fig. 5, the relay 86 would actuate switches 23 and 24 to connect to internal contacts 61 and 62 for power supply. Note that as this example is discussed with reference to the first transceiver 41, if this first transceiver 41 receives communication signals, then the second connector 20 is inferred to be in contact with a power supply for the restraint 50, and correspondingly the terminals 21, 22 of the second connector 20 are connected to the power block 31. Note also that the first transceiver 41 may have more input terminals and/or more output terminals than are shown in Fig. 6.

**Fig. 7** shows a restraint system 300 according to the invention. The restraint system 300 includes a seat 100 according to the invention, with a restraint 50 and a control unit 30 for the restraint 50, as well as a first connector 10 and a second connector 20. The restraint system 300 further includes a power line 201 for supplying power for the operation of the restraint and a communication line 202 for carrying communication signals related to the operation of the restraint 50.

As shown, the first connector 10 is connected to the power line 201, and the second connector 20 is connected to the communication line 202. Here, the control unit 30 is operating in the first mode of operation, as power is supplied via the first connector 10. If the orientation of the seat 100 is changed, so that the first connector 10 is in contact with the communication line 202 and the second connector 20 is in contact with the power line 201, then due to the configuration of the seat 100 according to the invention, which has been discussed extensively above, the following applies: The control unit 30 automatically switches into the second mode of operation, in which power is supplied via the second connector 20. No rewiring is required.

### List of Reference Signs

- 10: first connector
- 11: terminal
- 12: terminal
- 13: switch
- 14: switch
- 20: second connector
- 21: terminal
- 22: terminal
- 23: switch
- 24: switch
- 30: control unit
- 31: power block
- 32: communication block
- 33: switching unit
- 41: first transceiver
- 42: second transceiver
- 43: output terminal
- 44: input terminal
- 45: input terminal
- 50: restraint
- 61: internal contact for power supply
- 62: internal contact for power supply
- 71: internal contact for communication
- 72: internal contact for communication
- 80: transistor
- 81: resistor
- 82: resistor
- 85: coil
- 86: relay
- 87: contact
- 88: contact
- 100: seat
- 101: seat
- 102: seat
- 200: main controller
- 201: power line
- 202: communication line
- 300: restraint system

## Claims

1. Seat (100) for an occupant of a vehicle, the seat (100) including:
a restraint (50) for the occupant;
a first connector (10), capable of being connected to a power supply for the operation of the restraint (50) and capable of being connected to a communication line (202) for carrying signals related to the operation of the restraint (50);
a second connector (20), capable of being connected to a power supply for the operation of the restraint (50) and capable of being connected to a communication line (202) for carrying signals related to the operation of the restraint (50);
a control unit (30) for the restraint (50), the control unit (30) automatically switchable between a first mode of operation, in which power for the operation of the restraint (50) is supplied via the first connector (10), and a second mode of operation, in which power for the operation of the restraint (50) is supplied via the second connector (20).

2. Seat (100) according to claim 1, wherein the control unit (30) has a set of internal contacts (61, 62) for power supply, a set of internal contacts (71, 72) for communication, and at least one switch (13, 14, 23, 24), the at least one switch (13, 14, 23, 24) configured to:
for the first mode of operation, connect the first connector (10) to the set of internal contacts (61, 62) for power supply and connect the second connector (20) to the set of internal contacts (71, 72) for communication;
for the second mode of operation, connect the second connector (20) to the set of internal contacts (61, 62) for power supply and connect the first connector (10) to the set of internal contacts (71, 72) for communication.

3. Seat (100) according to claim 2, wherein the at least one switch (13, 14, 23, 24) includes a first relay and a second relay, the second relay different from the first relay, the first connector (10) connectable by the first relay to either the set of internal contacts (61, 62) for power supply or the set of internal contacts (71, 72) for communication, the second connector (20) connectable by the second relay to either the set of internal contacts (61, 62) for power supply or the set of internal contacts (71, 72) for communication.

4. Seat (100) according to claim 1, wherein the first connector (10) includes a first transceiver (41) for communication, the second connector (20) includes a second transceiver (42) for communication, the control unit (30) has a set of internal contacts (61, 62) for power supply and at least one switch (13, 14, 23, 24), the at least one switch (13, 14, 23, 24) configured to:
for the first mode of operation, connect the first connector (10) to the set of internal contacts (61, 62) for power supply;
for the second mode of operation, connect the second connector (20) to the set of internal contacts (61, 62) for power supply;
the control unit (30) configured to handle communication related to the restraint (50) via the second transceiver (42) in the first mode of operation and via the first transceiver (41) in the second mode of operation.

5. Seat (100) according to claim 4, wherein the at least one switch (13, 14, 23, 24) includes a first relay and a second relay, the second relay different from the first relay, the first connector (10) connectable by the first relay to the set of internal contacts (61, 62) for power supply, the second connector (20) connectable by the second relay to the set of internal contacts (71, 72) for power supply.

6. Seat (100) according to claim 4 or 5, wherein
the first transceiver (41) is configured to detect whether it is connected to the communication line (202), and, if this is the case, to send a control signal to cause the at least one switch (23, 24) to connect the second connector (20) to the set of internal contacts (61, 62) for power supply;
the second transceiver (42) is configured to detect whether it is connected to the communication line (202), and, if this is the case, to send a control signal to cause the at least one switch (13, 14) to connect the first connector (10) to the set of internal contacts (61, 62) for power supply.

7. Restraint system (300) for a vehicle, the restraint system (300) including
a seat (100) according to one of the claims 1 to 6;
a power line (201) for supplying power for the operation of the restraint (50);
a communication line (202) for carrying signals related to the operation of the restraint (50);
wherein the first connector (10) of the seat (100) is connected to the power line (201) and the second connector (20) of the seat (100) is connected to the communication line (202), if the seat (100) is in a first orientation;
wherein the second connector (20) of the seat (100) is connected to the power line (201) and the first connector (10) of the seat (100) is connected to the communication line (202), if the seat (100) is in a second orientation.

## Patentansprüche

1. Sitz (100) für einen Insassen eines Fahrzeugs, wobei der Sitz (100) umfasst:
eine Rückhaltevorrichtung (50) für den Insassen;
einen ersten Anschluss (10), der mit einer Stromversorgung für den Betrieb der Rückhaltevorrichtung (50) verbunden werden kann und mit einer Kommunikationsleitung (202) verbunden werden kann, um Signale zu übertragen, die sich auf den Betrieb der Rückhaltevorrichtung (50) beziehen;
einen zweiten Anschluss (20), der mit einer Stromversorgung für den Betrieb der Rückhaltevorrichtung (50) verbunden werden kann und mit einer Kommunikationsleitung (202) verbunden werden kann, um Signale zu übertragen, die sich auf den Betrieb der Rückhaltevorrichtung (50) beziehen;
eine Steuereinheit (30) für die Rückhaltevorrichtung (50), wobei die Steuereinheit (30) zwischen einer ersten Betriebsart, in der Energie für den Betrieb der Rückhaltevorrichtung (50) über den ersten Anschluss (10) zugeführt wird, und einer zweiten Betriebsart, in der Energie für den Betrieb der Rückhaltevorrichtung (50) über den zweiten Anschluss (20) zugeführt wird, automatisch umschaltbar ist.

2. Sitz (100) nach Anspruch 1, wobei die Steuereinheit (30) einen Satz interner Kontakte (61, 62) zur Stromversorgung, einen Satz interner Kontakte (71, 72) zur Kommunikation und mindestens einen Schalter (13, 14, 23, 24) aufweist, wobei der mindestens eine Schalter (13, 14, 23, 24) konfiguriert ist, um:
für die erste Betriebsart den ersten Anschluss (10) mit dem Satz interner Kontakte (61, 62) für die Stromversorgung zu verbinden und den zweiten Anschluss (20) mit dem Satz interner Kontakte (71, 72) für die Kommunikation zu verbinden;
für die zweite Betriebsart den zweiten Anschluss (20) mit dem Satz interner Kontakte (61, 62) für die Stromversorgung zu verbinden und den ersten Anschluss (10) mit dem Satz interner Kontakte (71, 72) für die Kommunikation zu verbinden.

3. Sitz (100) nach Anspruch 2, wobei der mindestens eine Schalter (13, 14, 23, 24) ein erstes Relais und ein zweites Relais umfasst, wobei sich das zweite Relais vom ersten Relais unterscheidet, wobei der erste Anschluss (10) durch das erste Relais entweder mit dem Satz interner Kontakte (61, 62) zur Stromversorgung oder dem Satz interner Kontakte (71, 72) zur Kommunikation verbunden werden kann, wobei der zweite Anschluss (20) durch das zweite Relais entweder mit dem Satz interner Kontakte (61, 62) zur Stromversorgung oder dem Satz interner Kontakte (71, 72) zur Kommunikation verbunden werden kann.

4. Sitz (100) nach Anspruch 1, wobei der erste Anschluss (10) einen ersten Sender-Empfänger (41) zur Kommunikation umfasst, der zweite Anschluss (20) einen zweiten Sender-Empfänger (42) zur Kommunikation umfasst, die Steuereinheit (30) einen Satz interner Kontakte (61, 62) zur Stromversorgung und mindestens einen Schalter (13, 14, 23, 24) aufweist, wobei der mindestens eine Schalter (13, 14, 23, 24) konfiguriert ist, um:
für die erste Betriebsart den ersten Anschluss (10) mit dem Satz interner Kontakte (61, 62) für die Stromversorgung zu verbinden;
für die zweite Betriebsart den zweiten Anschluss (20) mit dem Satz interner Kontakte (61, 62) für die Stromversorgung zu verbinden;
die Steuereinheit (30) so konfiguriert ist, dass sie die Kommunikation in Bezug auf die Rückhaltevorrichtung (50) über den zweiten Sender-Empfänger (42) in der ersten Betriebsart und über den ersten Sender-Empfänger (41) in der zweiten Betriebsart handhabt.

5. Sitz (100) nach Anspruch 4, wobei der mindestens eine Schalter (13, 14, 23, 24) ein erstes Relais und ein zweites Relais umfasst, wobei sich das zweite Relais vom ersten Relais unterscheidet, wobei der erste Anschluss (10) durch das erste Relais mit dem Satz interner Kontakte (61, 62) zur Stromversorgung verbunden werden kann, wobei der zweite Anschluss (20) durch das zweite Relais mit dem Satz interner Kontakte (71, 72) zur Stromversorgung verbunden werden kann.

6. Sitz (100) nach Anspruch 4 oder 5, wobei
der erste Sender-Empfänger (41) so konfiguriert ist, dass er erkennt, ob er mit der Kommunikationsleitung (202) verbunden ist, und, wenn dies der Fall ist, ein Steuersignal sendet, um den mindestens einen Schalter (23, 24) zu veranlassen, den zweiten Anschluss (20) mit dem Satz interner Kontakte (61, 62) für die Stromversorgung zu verbinden;
der zweite Sender-Empfänger (42) so konfiguriert ist, dass er erkennt, ob er mit der Kommunikationsleitung (202) verbunden ist, und, wenn dies der Fall ist, ein Steuersignal sendet, um den mindestens einen Schalter (13, 14) zu veranlassen, den ersten Anschluss (10) mit dem Satz interner Kontakte (61, 62) zur Stromversorgung zu verbinden.

7. Rückhaltesystem (300) für ein Fahrzeug, wobei das Rückhaltesystem (300) umfasst:
einen Sitz (100) nach einem der Ansprüche 1 bis 6;
eine Stromleitung (201) zur Energieversorgung für den Betrieb der Rückhaltevorrichtung (50);
eine Kommunikationsleitung (202) zur Übertragung von Signalen, die sich auf den Betrieb der Rückhalteeinrichtung (50) beziehen;
wobei der erste Anschluss (10) des Sitzes (100) mit der Stromleitung (201) verbunden ist und der zweite Anschluss (20) des Sitzes (100) mit der Kommunikationsleitung (202) verbunden ist, wenn der Sitz (100) in einer ersten Ausrichtung ist;
wobei der zweite Anschluss (20) des Sitzes (100) mit der Stromleitung (201) verbunden ist und der erste Anschluss (10) des Sitzes (100) mit der Kommunikationsleitung (202) verbunden ist, wenn sich der Sitz (100) in einer zweiten Ausrichtung befindet.

## Revendications

1. Siège (100) pour un occupant d'un véhicule, le siège (100) comprenant :
un dispositif de retenue (50) pour l'occupant ;
un premier connecteur (10), pouvant être connecté à une alimentation électrique pour le fonctionnement du dispositif de retenue (50) et pouvant être connecté à une ligne de communication (202) pour transmettre des signaux liés au fonctionnement du dispositif de retenue (50) ;
un deuxième connecteur (20), pouvant être connecté à une alimentation électrique pour le fonctionnement du dispositif de retenue (50) et pouvant être connecté à une ligne de communication (202) pour transmettre des signaux liés au fonctionnement du dispositif de retenue (50) ;
une unité de commande (30) pour le dispositif de retenue (50), l'unité de commande (30) pouvant être commutée automatiquement entre un premier mode de fonctionnement, dans lequel l'alimentation électrique pour le fonctionnement du dispositif de retenue (50) est fournie via le premier connecteur (10), et un deuxième mode de fonctionnement, dans lequel l'alimentation électrique pour le fonctionnement du dispositif de retenue (50) est fournie via le deuxième connecteur (20).

2. Siège (100) selon la revendication 1, dans lequel l'unité de commande (30) comporte un ensemble de contacts internes (61, 62) pour l'alimentation électrique, un ensemble de contacts internes (71, 72) pour la communication, et au moins un commutateur (13, 14, 23, 24), le au moins un commutateur (13, 14, 23, 24) étant configuré pour :
pour le premier mode de fonctionnement, connecter le premier connecteur (10) à l'ensemble de contacts internes (61, 62) pour l'alimentation électrique et connecter le deuxième connecteur (20) à l'ensemble de contacts internes (71, 72) pour la communication ;
pour le deuxième mode de fonctionnement, connecter le deuxième connecteur (20) à l'ensemble de contacts internes (61, 62) pour l'alimentation électrique et connecter le premier connecteur (10) à l'ensemble de contacts internes (71, 72) pour la communication.

3. Siège (100) selon la revendication 2, dans lequel le au moins un commutateur (13, 14, 23, 24) comprend un premier relais et un deuxième relais, le deuxième relais étant différent du premier relais, le premier connecteur (10) pouvant être connecté par le premier relais soit à l'ensemble de contacts internes (61, 62) pour l'alimentation électrique ou à l'ensemble de contacts internes (71, 72) pour la communication, le deuxième connecteur (20) pouvant être connecté par le deuxième relais soit à l'ensemble de contacts internes (61, 62) pour l'alimentation électrique, soit à l'ensemble de contacts internes (71, 72) pour la communication.

4. Siège (100) selon la revendication 1, dans lequel le premier connecteur (10) comprend un premier émetteur-récepteur (41) pour la communication, le deuxième connecteur (20) comprend un deuxième émetteur-récepteur (42) pour la communication, l'unité de commande (30) comporte un ensemble de contacts internes (61, 62) pour l'alimentation électrique et au moins un commutateur (13, 14, 23, 24), le au moins un commutateur (13, 14, 23, 24) étant configuré pour :
pour le premier mode de fonctionnement, connecter le premier connecteur (10) à l'ensemble de contacts internes (61, 62) pour l'alimentation électrique ;
pour le deuxième mode de fonctionnement, connecter le deuxième connecteur (20) à l'ensemble de contacts internes (61, 62) pour l'alimentation électrique ;
l'unité de commande (30) étant configurée pour gérer la communication relative au dispositif de retenue (50) via le deuxième émetteur-récepteur (42) dans le premier mode de fonctionnement et via le premier émetteur-récepteur (41) dans le deuxième mode de fonctionnement.

5. Siège (100) selon la revendication 4, dans lequel le au moins un commutateur (13, 14, 23, 24) comprend un premier relais et un deuxième relais, le deuxième relais étant différent du premier relais, le premier connecteur (10) pouvant être connecté par le premier relais à l'ensemble de contacts internes (61, 62) pour l'alimentation électrique, le deuxième connecteur (20) pouvant être connecté par le deuxième relais à l'ensemble de contacts internes (71, 72) pour l'alimentation électrique.

6. Siège (100) selon la revendication 4 ou 5, dans lequel
le premier émetteur-récepteur (41) est configuré pour détecter s'il est connecté à la ligne de communication (202) et, si tel est le cas, pour envoyer un signal de commande afin d'amener le au moins un commutateur (23, 24) à connecter le deuxième connecteur (20) à l'ensemble de contacts internes (61, 62) pour l'alimentation électrique ;
le deuxième émetteur-récepteur (42) est configuré pour détecter s'il est connecté à la ligne de communication (202) et, si tel est le cas, pour envoyer un signal de commande afin d'amener le au moins un commutateur (13, 14) à connecter le premier connecteur (10) à l'ensemble de contacts internes (61, 62) pour l'alimentation électrique.

7. Système de retenue (300) pour un véhicule, le système de retenue (300) comprenant
un siège (100) selon l'une des revendications 1 à 6 ;
une ligne d'alimentation (201) pour fournir l'alimentation nécessaire au fonctionnement du dispositif de retenue (50) ;
une ligne de communication (202) pour transmettre des signaux liés au fonctionnement du dispositif de retenue (50) ;
dans lequel le premier connecteur (10) du siège (100) est connecté à la ligne d'alimentation (201) et le deuxième connecteur (20) du siège (100) est connecté à la ligne de communication (202), si le siège (100) est dans une première orientation ;
dans lequel le deuxième connecteur (20) du siège (100) est connecté à la ligne d'alimentation (201) et le premier connecteur (10) du siège (100) est connecté à la ligne de communication (202), si le siège (100) est dans une deuxième orientation.
